Europäisches Patentamt

European Patent Office

Office européen des brevets

(11) Publication number: **0 027 343**
**B1**

# EUROPEAN PATENT SPECIFICATION

(45) Date of publication of patent specification: **11.05.83**

(21) Application number: **80303509.6**

(22) Date of filing: **06.10.80**

(51) Int. Cl.³: **H 04 M 9/10**, H 04 B 3/20, H 04 B 1/10

(54) **A voice detector.**

(30) Priority: **11.10.79 GB 7935341**
**02.10.80 GB 8031854**

(43) Date of publication of application:
**22.04.81 Bulletin 81/16**

(45) Publication of the grant of the patent:
**11.05.83 Bulletin 83/19**

(84) Designated Contracting States:
**CH DE FR IT LI NL SE**

(56) References cited:
**DE - A - 2 432 634**
**DE - A - 2 535 029**
**DE - B - 2 233 976**
**DE - B - 2 714 132**

(73) Proprietor: **THE MARCONI COMPANY LIMITED**
**Marconi House New Street**
**Chelmsford Essex CM1 1PL (GB)**

(72) Inventor: **Heard, Maurice Clifford**
**Sherridan Lodge 40, Elm Grove**
**Hullbridge Essex (GB)**
Inventor: **Green, Stephen Graham**
**73, Artillery Street**
**Colchester Essex (GB)**

(74) Representative: **Hoste, Colin Francis**
**The Marconi Company Limited Marconi House**
**New Street**
**Chelmsford, Essex CM1 1PL (GB)**

Courier Press, Leamington Spa, England.

# A voice detector

The invention relates to a voice detector. A requirement exists to detect the presence of human speech, but it is difficult to provide a suitable detector, which responds reliably and quickly to a voice and which is insensitive to other sounds or interference. For example, in a two way communication link in which speech is carried by electrical signals over a single channel, it is necessary to ensure that signals are sent in only one direction at a time to avoid interference and possibly disturbing feedback effects. Thus it would be desirable to detect the presence of voice signals travelling in one direction on a communication link so as to prevent electrical signals being sent in the opposite direction at the same time. A requirement of this kind particularly arises when a two way telephone conversation, for example is to be transmitted over a single wire or in a single frequency channel. The voice signal should be rapidly detected so that the initial portions of the speech are not lost. The detector should not easily respond to noise, or other signals which are not derived from voice information, since this could otherwise inhibit the correct transmission of voice signals.

The present invention seeks to provide a voice detector in which this requirement is met.

German Auslegeschrift 2233976 describes a circuit which is intended to detect the presence of voice signals, but it operates to clip the level of the incoming signals to generate a constant amplitude pulse stream prior to processing. The present invention seeks to provide an improved voice detector.

According to this invention, a voice detector includes means for receiving input signals; means for delaying for a first predetermined duration said input signals; correlation means for continuously comparing the amplitudes of them for a second predetermined duration with the amplitudes of undelayed received signals and for producing a control signal representative of the instantaneous result of said comparison; and means for producing an output signal having at least a third predetermined duration when said control signal exceeds a threshold value, said third predetermined duration being longer than either said first or second predetermined duration.

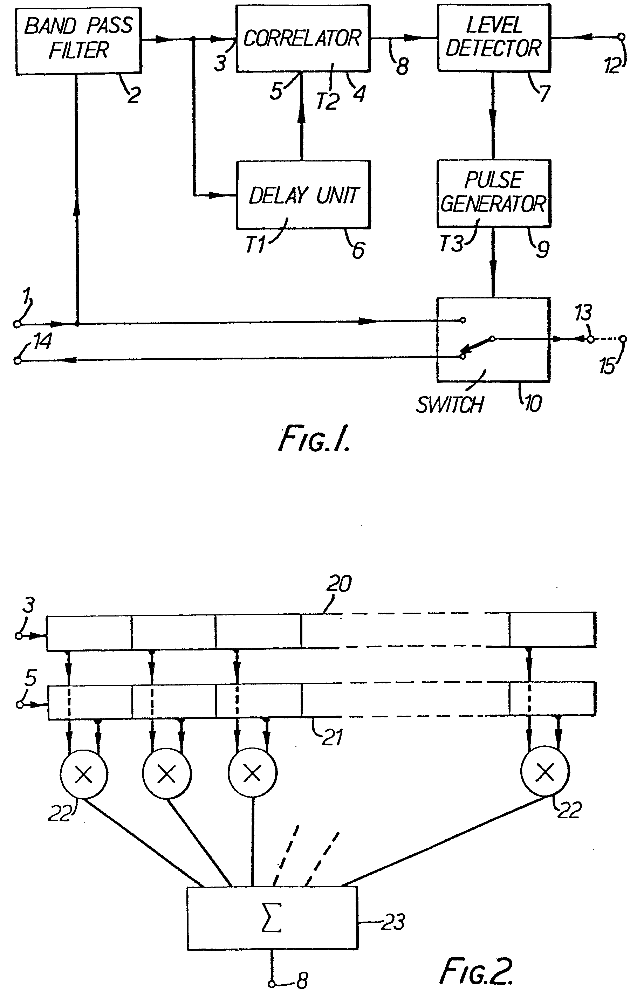

The invention is further described with reference to Figure 1, which illustrates a voice detector in accordance with the present invention,

Figure 2 illustrates part thereof in greater detail,

Figure 3 is an explanatory diagram relating to Figure 1,

Figure 4 illustrates an alternative embodiment of the invention, and

Figures 5, 6 and 7 are explanatory diagrams relating to Figure 4.

The voice detector is intended to control a two way communications link, which utilises only a single signal path. It is important to ensure that voice signals are not sent along the single signal path simultaneously in both directions since this would cause interference. Additionally, a person speaking at one end of the link would hear his own voice amplified and returned to him, and in practice this could be very disconcerting. Consequently, the voice detector is used to monitor the presence of voice signals on the link. When a voice signal is detected the required interconnections are set up so as to enable the person who is speaking at one end of the link to be heard by the user at the other end of the link. When the first user stops speaking, typically at the end of a sentence, the voice detector is than able to allow the other user to reply and be heared by appropriately re-setting the link interconnections. In order to provide satisfactory and reliable operation, the voice detector must be able to distinguish the human voice from background noise and extraneous signals which are invariably present.

The voice detector is provided with an input terminal 1 at which the information provided by one of the two users is received. The signal received at terminal 1 is passed to a bandpass filter which has a pass response extending from 300 Hz to 2700 Hz. By this means extraneous out of band frequencies are removed leaving only signals in the wanted band which includes voice frequencies. The frequency band selected corresponds to a normal telephone frequency band. The filtered frequency signal is applied to one input 3 of a correlator 4. It is also applied to a second input 5 of the correlator 4 via an analogue delay line 6 having a controllable delay T1. The output of the correlator 4, which serves to compare the two signals applied at its inputs 3 and 5 in a manner described in connection with Figure 2, is in the form of a control signal which is representative of the degree of similarity between these two signals. The control signal obtained in this way is applied to an adjustable level detector 7 over line 8. By adjusting the threshold level of the detector 7, an acceptable degree of similarity can be selected as required. The required threshold can be adjusted by applying a variable signal to the level detector via terminal 12. The level detector 7 acts to compare the magnitude of the control signal on line 8 with the threshold level applied via terminal 12. When the control signal present on line 8 exceeds the threshold value, the level detector 7 provides an output to a pulse generator 9. The pulse generator 9 comprises a re-triggerable monostable. When the level detector 7 provides an output, the monostable is set so as to provide an output pulse for a predetermined minimum duration T3, which operates a switch 10. The switch 10 is held in one state for the duration of the pulse provided by the pulse generator 9 so as to connect the input terminal 1 to an output terminal 13. This period is determined by the relaxation time of the monostable. However, if a further signal is obtained from the level detector before the expiry of the relaxation time or the original signal is still present, the level of the output pulse provided by the pulse generator 9 does not change. In effect, the monostable is re-triggered for as long as output signals are continually present at the level detector 7. When the output signal disappears the pulse generator 9 remains in the same state until the relaxation period T3 of the monostable has expired.

The correlator 4 is illustrated in greater detail in Figure 2. It consists of two shift registers 20 and 21, each having respective input terminals 3 and 5. Signals applied to either of the input terminals 3 and 5 are progressively clocked along the shift registers 20 and 21 under the action of a clock signal applied to clock inputs 25 from a source not shown. The shift registers 20 and 21 are such as to periodically sample the amplitude of the signals present at the input terminals 3 and 5 and to pass an analogue signal having a corresponding amplitude from one stage of a shift register to the next stage at each clock period. The shift registers thus each act as a delay line having a total delay period of T2. Conveniently, the shift registers 20 and 21 could comprise charge coupled devices. Each stage of the shift registers 20 and 21 is connected to respective inputs of an analogue multiplier 22. Although only four such stages and multipliers are indicated in Figure 2, in practice a large number would be provided—typically sixty four stages. The outputs from each of the multipliers 22 are fed to a summation unit 23, which provides an output signal on line 8. The correlator 4 is itself a known device and is made by Reticon Inc. under type number R5403—in this form each device contains shift registers having thirty two stages each, so two devices coupled together are required to give the delay of sixty four stages referred to above.

Since the signal applied to input terminal 5 is delayed by the delay line 6 for a period T1 relative to the signal applied to terminal 3, the action of the correlator 4 is to continuously compare the received signal with a delay version of itself. If the signal received at terminal 1 consists entirely of random noise, there will exist no consistent correlation with time between the two signals at terminals 3 and 5 and the effect of multiplying particular elements of the received signal with preceding elements will produce a summation signal having a relatively low value. However, in the case of a human voice, there is a good degree of correlation between signal amplitude and time over short periods and it is found that a human voice produces an output on line 8, which is substantially greater than would be obtained with a completely uncorrelated signal provided that time durations T1 and T2 are suitably related. The output signal is present on line 8 only whilst voice signals are actually being received and the purpose of the pulse generator 9 is to bridge the silent pauses in normal speech, i.e. the gaps between adjacent spaced syllables of a sentence and pauses between sentences etc. The quality of the correlation obtained is dependent on the length T1 of the delay line 6, the length T2 of the shift registers 20 and 21 and the number of multipliers 22. Additionally, the relaxation time T3 of the monostable forming part of the pulse generator 9 must be set so as to give a subjectively acceptable effect to users.

Typically the delay T1 of the delay unit 6 is between 0.3 mS and 3 mS, the delay T2 provided by a shift register 20 or 21 is 326 $\mu$S, and the relaxation period T3 of the monostable of the pulse generator 9 is about 0.3 second to 1 second. These figures are, of course, given only by way of example, and in practice the values of T1 and T3 will be set up empirically.

When the pulse provided by pulse generator 9 terminates, the switch 10 operates to connect terminal 13 to terminal 14. The communication path is represented by the broken line between terminals 13 and 15. It is a single two way link, in which signals can travel in only one direction at a time. A person at the terminal 15 can therefore speak only when the person at terminal 1 is silent—thus the person at terminal 1 assumes control of the link.

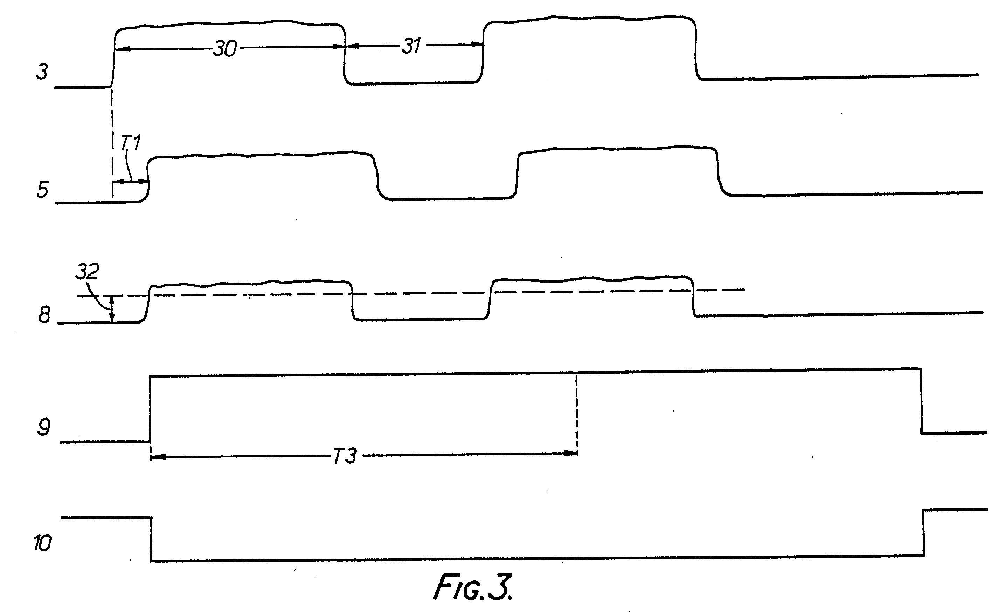

Figure 3 is an explanatory diagram illustrating the waveforms which are present at various points in the circuit diagram shown in Figure 1. The topmost line in Figure 3 represents the waveform which is applied to input 3 of the correlator 4. It consists of two bursts of speech signals, the first speech signal lasting for a time indicated by reference numeral 30 and being spaced from the second burst of speech by a time 31. It is assumed that during the time 30, signal components are present which have a significant non-zero amplitude. The same signal is applied to terminal 5 of the correlator 4, but is delayed by a time T1 equal to the delay provided by the delay unit 6. This waveform is illustrated in the second line of Figure 3. The output of correlator 4, which is the control signal present on line 8 is shown in the third line and it will be seen that this waveform is substantially zero except for those periods of time when the product of the waveforms in the first and second lines possess a significant value. It is assumed that the magnitude of the reference signal applied to terminal 12 and which acts as the threshold level exceeds the zero value of the waveform by an amount designated by the arrows 32.

The output of the pulse generator 9 is shown in the fourth line of Figure 3 and the relaxation period of the monostable which forms part of the pulse generator 9 is indicated as period T3. It is assumed in Figure 3 that the second speech burst follows the first within the period T3. Consequently, the monostable is triggered for a second period so that the state of the switch 10 remains constant until a further period T3 has elapsed from the commencement of the second rising edge identified with the waveform on line 8. The corresponding switching action of the switch 10 is shown in the bottom line of Figure 3, from which it can be seen that the path from terminal 1 to terminal 13 is held open whilst a pulse output is applied by the pulse generator 9. Whilst no speech is present at input terminal 1, the switch 10 reverts to the condition in which terminal 13 is connected to terminal 14 to allow speech signals to travel from the other end 15 of the communication link to terminal 14.

The effective amplitude of the waveform on line 8 is a function both of the period T2 and the number of individual multipliers 22 forming part of the correlator 4.

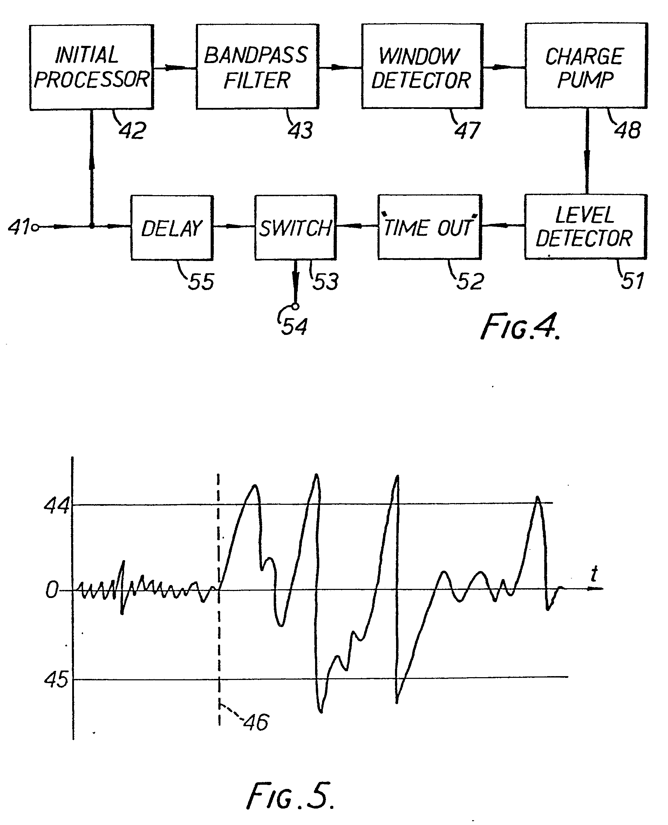

Figure 4 shows an alternative embodiment of the voice detector which is able to operate with greater reliability in the presence of certain kinds of noise. The voice detector is provided with an input terminal 41 at which the signal carrying speech is received. The signal is passed to an initial processor 42 which corresponds exactly to, and comprises, the bandpass filter 2, the correlator 3, and the delay unit 6 shown in Figure 1. These items are represented by the single block 42 merely for the sake of simplicity. The output of the initial process 42 (this output signal corresponds exactly to the output of the correlator 4) is passed to a bandpass filter 43 having an extremely narrow pass band frequency range. Typically, the pass band extends from 1 Hz to 5 Hz. In view of the difficulty of designing such a filter having sharp cut-off characteristics, it may be desirable, in practice, to constitute the filter as a number of separate filtering stages. It is believed that the signal provided by the processor 42 is likely to be indicative of the presence of speech at terminal 41 if it contains significant frequency components within this very narrow pass band. The signal is related to the syllabic rate, but because of the previous processing to which it has been subject within the processor 42 it is, in general, not exactly equal to ·the received syllabic rate. The output signal produced by the bandpass filter 43 is illustrated in Figure 5 in which the variation of signal amplitude with time is shown. As the bandpass filter 43 has a lower cut-off frequency of 1 Hz, it is, of course, a.c. coupled and consequently its output signal is centred on zero volts. The portion of Figure 5 to the left of the broken line 46 represents the kind of signal which is produced by the bandpass filter when a signal which does not contain speech is applied to input terminal 41. The signal will, however, contain noise to a greater or lesser extent. A rapidly varying low amplitude signal is provided which does not cross the two threshold levels 44 and 45 except upon very rare occasions.

Conversely, the signal produced when speech is present is shown to the right of the broken line 46 and it will be seen that a signal having an irregularly varying amplitude is produced. This signal has periodic high amplitude excursions which are arranged to exceed the threshold values 44 and 45, which are set accordingly.

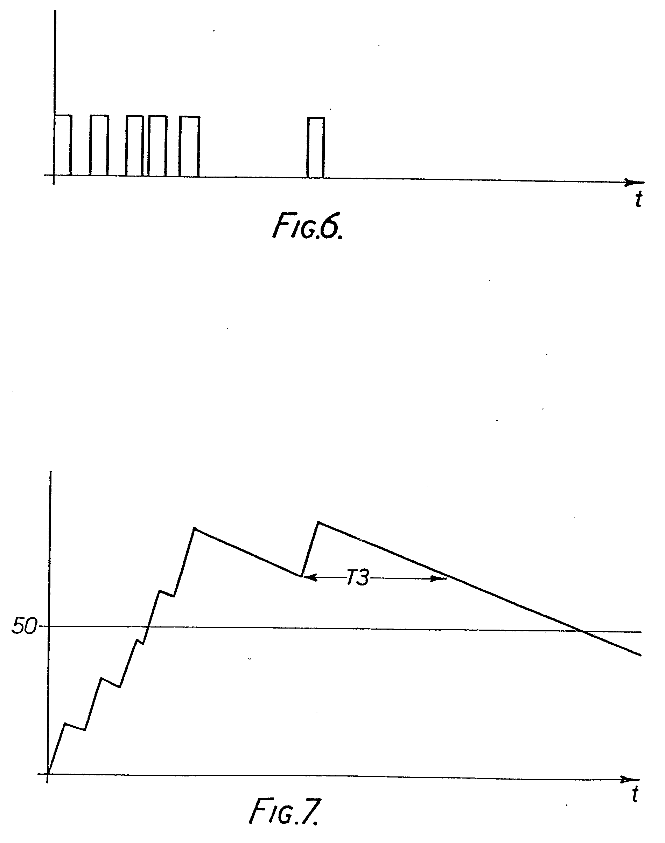

A window detector 47 is arranged to receive the output of the bandpass filter 43 and it incorporates two threshold levels 44 and 45. These two threshold levels may be pre-set or they may be variable during operation in accordance with a required sensitivity or false alarm rate. Each time the signal crosses either threshold 44 or 45. The window detector 47 generates an output pulse. A typical train of such pulses is illustrated in Figure 6 and these pulses are applied to a charge pump circuit 48. The charge pump circuit 48 is simply a circuit containing a storage capacitor which is charged relatively rapidly via a forward biassed diode whilst a pulse is applied to it, but the charge on the capacitor subsequently decays relatively slowly at a rate determined by the time constant of a discharge resistor, or the like. The output signal produced by the charge pump 48 is illustrated diagrammatically in Figure 7 and it will be seen that each time a pulse from the window detector 47 is received, the output level increases rapidly but then decays slowly until the next pulse is received. If a number of pulses are received in rapid succession, the charge level rises cumulatively—hence the term charge pump. A reference level 50 is incorporated in a further level detector 51, which provides an output only whilst the output of the charge pump circuit 48 exceeds this reference level. This means that the level detector 51 does not provide an output if the waveform shown in Figure 5 exceeds one or other of the threshold levels 44 or 45 on rare occasions or spasmodically. This reduces the susceptibility of the speech detector to certain kinds of noise. Thus the level detector 51 provides an output only when a continuous stream of syllabic pulses is produced in a sufficient number to pump the charge storage level of the charge pump 48 to a sufficiently high value—i.e. to the level 50. The decay time of the charge pump 48 is arranged to take into account the naturally occurring pauses in speech so that a continuous signal is generated by the level detector 51 whilst speech is present. In order to avoid the system responding to bursts of noise, the output of the level detector 51 is passed to a "time out" circuit 52, which is arranged to provide an output only if the signal applied to the level detector 51 exceeds the threshold value 50 for a predetermined time, which is typically about one second. Thus, the time out circuit 52 provides an output only when its input signal has been present for this predetermined time, and providing that its signal is present so as to satisfy this requirement, the time out circuit 52 generates a control signal which renders the switch 53 conductive. The switch 53 routes the speech signal received at terminal 41 to an output terminal 54 for utilisation.

It will be apparent that the various filter and control circuits introduce significant time delays and a compensating delay is provided by the delay circuit 55; this ensures that the switch 53 operates on the speech signal which generated the control signal at that instant. Typically the delay provided by circuit 55 is in excess of one second.

The initial processor 42 contains the same two time constants T1 and T2 as described with reference to Figure 1. However, the time T3 is represented by the decay characteristics of the charge pump 48 and corresponds approximately to the time necessary for its signal level to decay to the level which it had immediately before the preceding charge pulse. This period T3 is indicated at a convenient portion of the waveform shown in Figure 7 and is typically of the order of a half to one second.

## Claims

1. A voice detector including means (1) for receiving input signals; means (6) for delaying for a first predetermined duration (77) said input signals; correlation means (4) for continuously comparing the amplitudes of them for a second predetermined duration (T2) with the amplitudes of undelayed received signals and for producing a control signal representative of the instantaneous result of said comparison; and means (7, 9) for producing an output signal having at least a third predetermined duration (T3) when said control signal exceeds a threshold value, said third predetermined duration being longer than either said first or second predetermined duration and said output signal being indicative of the presence of voice signals.

2. A voice detector as claimed in claim 1, and wherein said first predetermined duration is greater than said second predetermined duration.

3. A voice detector as claimed in claim 1 or 2 and wherein said threshold value (12) is adjustable.

4. A voice detector as claimed in claim 1, 2 or 3 and wherein said correlation means (4) includes a plurality of multipliers (22) for multiplying successive delayed signals with successive undelayed signals, and means (23) for summing the results of the individual multiplications to produce said control signal.

5. A voice detector as claimed in any of the claims 1 to 4 and wherein said means (7, 9) for producing an output signal comprises a retriggerable monostable (9) which provides a continuous output signal so long as said control signal exceeds said threshold value at intervals which are less than said third duration.

6. A voice detector as claimed in any of claims 1 to 5 and wherein said output signal is used to determine the transmission direction of a communication link.

7. A voice detector as claimed in any of the claims 1 to 4 and wherein said control signal is filtered by a narrow band passband filter (43) prior to being applied to a threshold circuit (47).

8. A voice detector as claimed in claim 7 and wherein said pass band extends from 1 Hz to 5 Hz.

9. A voice detector as claimed in claim 7 or 8 and wherein pulse generating means (47) are provided for generating a pulse each time the filtered control signal exceeds the threshold value.

10. A voice detector as claimed in claim 9 and wherein means (48, 51) are provided for generating a second control signal if the time spacing between adjacent pulses produced by said pulse generating means (47) is less than a predetermined value related to said third predetermined duration.

11. A voice detector as claimed in claim 10 and wherein said second control signal is used to control the passage of said received input signals only if said second control signal is continuously present for a certain time.

## Patentansprüche

1. Spracherfassungsvorrichtung mit Einrichtungen (1) zum Empfang von Eingangssignalen; Einrichtungen (6) zum Verzögern der besagten Eingangssignale über eine erste vorbestimmte Zeitdauer (77); Korrelationseinrichtungen (4) zum kontinuierlichen Vergleich der Amplituden besagter Signale über eine zweite vorbestimmte Zeitdauer (T2) mit den Amplituden der unverzögert empfangenen Signale und zum Erzeugen eines Steuersignals, das dem Momentergebnis des besagten Vergleichs entspricht; sowie Einrichtugen (7, 9) zum Erzeugen eines Ausgangssignals mit einer mindestens dritten vorbestimmten Zeitdauer (T3) beim Überschreiten des besagten Steuersignals über einen Schwellenwert, wobei die besagte dritte vorbestimme Zeitdauer länger als entweder die erste oder die zweite vorbestimmte Zeitdauer ist und das besagte Ausgangssignal die Anwesenheit von Sprachsignalen anzeigt.

2. Spracherfassungsvorrichtung nach Anspruch 1 und bei der die erste besagte vorbestimmte Zeitdauer länger ist, als die zweite besagte vorbestimmte Zeitdauer.

3. Spracherfassungsvorrichtung nach Anspruch 1 oder 2 und bei der der besagte Schwellenwert (12) einstellbar ist.

4. Spracherfassungsvorrichtung nach Anspruch 1, 2 oder 3 und bei der die besagten Korrelationseinrichtungen (4) mehrere Vervielfacherschaltungen (22) enthält, zum multiplizieren aufeinanderfolgender verzögerter Signale mit aufeinanderfolgenden unverzögerten Signalen und Einrichtungen (23) zum Summieren der Ergebnisse der einzelnen Multiplikationen um das besagte Steuersignal zu bilden.

5. Spracherfassungsvorrichtung nach einem der Ansprüche 1 bis 4 und bei der die besagten Einrichtungen (7, 9) zum Bilden eines Ausgangssignals aus einem wiederauslösbarem Univibrator (9) bestehen, der ein kontinuierliches Ausgangssignal abgibt, vorausgesetzt das besagte Steuersignal den besagten Schwellenwert bei Zeitabständen übersteigt, die kürzer als die besagte dritte Zeitdauer sind.

6. Spracherfassungsvorrichtung nach einem der Ansprüche 1 bis 5 und bei der das besagte Ausgangssignal zum Bestimmen der Übertragungsrichtung einer Fernmeldestrecke verwendet wird.

7. Spracherfassungsvorrichtung nach einem der Ansprüche 1 bis 4 und bei der das besagte Steuersignal vor dem Anlegen an ' eine Schwellenschaltung (47) in einem Schmalband-Durchlaßfilter (43) gefiltert wird.

8. Spracherfassungsvorrichtung nach Anspruch 7 und bei der der Durchlaßbereich von 1 bis 5 Hz erstreckt.

9. Spracherfassungsvorrichtung nach Anspruch 7 oder 8 und bei der Impulsbildeeinrichtungen (47) vorgesehen sind, um bei jedem Übersteigen des gefilterten Steuersignals über den Schwellenwert einen Impuls zu bilden.

10. Spracherfassungsvorrichtung nach Anspruch 9 und bei der Einrichtungen (48, 51) zum Bilden eines zweiten Steuersignals vorgesehen sind, falls der durch die besagten Impulsbildeeinrichtungen (47) gebildete Zeitabstand zwischen aufeinanderfolgenden Impulsen kürzer als ein vorbestimmter Wert ist, der der besagten dritten vorbestimmten Zeitdauer entspricht.

11. Spracherfassungsvorrichtung nach Anspruch 10 und bei der das besagte zweite Steuersignal nur dann zum Steuern des Durchgangs der besagten Eingangssignale verwendet wird, falls das besagte zweite Steuersignal kontinuierlich für eine bestimmte Zeit ansteht.

**Revendications**

1. Un détecteur de voix comprenant des moyens (1) pour recevoir les signaux d'entrée; des moyens (6) pour retarder pendant une première période prédéterminée (77) lesdits signaux d'entrée; des moyens de corrélation (4) pour comparer en continu l'amplitude desdits signaux pendant une deuxième période prédéterminée (T2) à l'amplitude des signaux reçus non retardés et pour produire un signal de commande représentatif du résultat instantané de ladite comparaison; ainsi que des moyens (7, 9) pour produire un signal de sortie présentant au moins une troisième période prédéterminée (T3) lorsque ledit signal de commande dépasse une valeur de seuil, ladite troisième période prédéterminée étant plus longue que soit la première période prédéterminée soit la deuxième et ledit signal de sortie indiquant la présence de signaux vocaux.

2. Un détecteur de voix suivant la revendication 1 et dans lequel ladite première période prédéterminée est supérieure à ladite deuxième période prédéterminée.

3. Un détecteur de voix selon la revendication 1 ou 2 et dans lequel ladite valeur de seuil (12) est ajustable.

4. Un détecteur de voix selon la revendication 1, 2 ou 3 et dans lequel lesdits moyens de corrélation (4) comprennent plusieurs multiplicateurs (22) pour multiplier les signaux successifs retardés aux signaux non retardés et des moyens (23) permettant de totaliser les résultats des multiplications individuelles pour produire ledit signal de commande.

5. Un détecteur de voix selon l'une des revendications 1 à 4 et dans lequel lesdits moyens (7, 9) permettant de produire un signal de sortie comprennent un monostable redéclenchable (9) qui fournit un signal de sortie continu tant que ledit signal de commande dépasse ladite valeur de seuil à des intervalles qui sont inférieurs à ladite troisième période.

6. Un détecteur de voix selon l'une des revendications 1 à 5 et dans lequel ledit signal de sortie sert à déterminer le sens de la transmission d'une liaison de communications.

7. Un détecteur de voix selon l'une des revendications 1 à 4 et dans lequel ledit signal de commande est traité par un filtre passe-bande à bande étroite (43) avant d'être appliqué à un circuit de seuil (47).

8. Un détecteur de voix selon la revendication 7 et dans lequel ladite passe-bande s'étend de 1 Hz à 5 Hz.

9. Un détecteur de voix selon la revendication 7 ou 8 et dans lequel des moyens de génération d'impulsions (47) sont prévus pour produire une impulsion chaque fois que le signal de commande filtré dépasse la valeur de seuil.

10. Un détecteur de voix selon la revendication 9 et dans lequel des moyens (48, 51) sont fournis pour produire un deuxième signal de commande si l'intervalle entre des impulsions adjacentes produites par lesdits moyens de génération d'impulsions (47) est inférieur à une valeur prédéterminée rapportée à ladite troisième période prédéterminée.

11. Un détecteur de voix selon la revendication 10 et dans lequel ledit deuxième signal de commande sert à commander le passage desdits signaux d'entrée reçus uniquement si ledit deuxième signal de commande est présent en continu pendant un certain temps.

*Fig.1.*

*Fig.2.*

FIG.3.

0 027 343

FIG.4.

FIG.5.

FIG.6.

FIG.7.